# FASCICULE DE BREVET EUROPEEN

(11) **EP 1 263 688 B1**
(45) Date de publication et mention de la délivrance du brevet: **20.10.2004**
(21) Numéro de dépôt: 01913971.6
(22) Date de dépôt: 09.03.2001
(51) Int. Cl.: C04B 20/00, C04B 28/02, C04B 14/48

(54) **COMPOSITE CIMENTAIRE MULTIECHELLE A ECROUISSAGE POSITIF ET DUCTILE EN TRACTION UNIAXIALE**
MEHRBEREICHS-ZEMENTVERBUNDSTOFF MIT POSITIVER KALTVERARBEITUNG UND DUKTIL BEI EINACHSIGEM ZUG
MULTIPLE SCALE CEMENT COMPOSITE WITH POSITIVE AND DUCTILE SETTING IN UNIAXIAL TENSION

(30) Priorité: 14.03.2000 FR 0003228
(43) Date de publication de la demande: 11.12.2002
(73) Titulaire: LABORATOIRE CENTRAL DES PONTS ET CHAUSSEES, 75015 Paris (FR)
(72) Inventeur: ROSSI, Pierre, F-75014 Paris (FR)
(74) Mandataire: Le Bras, Hervé
(86) Numéro de dépôt international: PCT/FR2001/000707
(87) Numéro de publication internationale: WO 2001/068548

(56) Documents cités:
- EP-A- 0 934 915
- WO-A-95/01316
- DE-A- 1 801 561
- FR-A- 2 771 406
- US-A- 5 522 926
- P. ROSSI ET AL.: "Les bétons fibres à ultra-hautes performances. L'expérience actuelle du LCPC" BULLETIN DES LABORATOIRES DES PONTS ET CHAUSS ES, vol. 204, 1996, pages 87-95, XP000964601 cité dans la demande
- DATABASE WPI Section Ch, Week 198328 Derwent Publications Ltd., London, GB; Class L02, AN 1983-708993 XP002152849 & JP 58 095637 A (ISHIKAWAJIMA HARIMA JUKOGYO KK), 7 juin 1983 (1983-06-07)

## Description

L'invention concerne le domaine des bétons fibrés ultraperformants, permettant notamment de réaliser des éléments de structures de génie civil pour bâtiments et d'ouvrages d'art et ayant des propriétés supérieures à celles des éléments de la technique antérieure.

Elle concerne plus spécialement un composite cimentaire fibré dont la matrice cimentaire a une résistance en compression supérieure à 150 MPa et une résistance en traction uniaxiale supérieure ou égale à 6 MPa, cette matrice ayant un rapport eau/liant inférieur ou égal à 0,25 et étant constituée d'un mélange de ciment, d'éléments granulaires, d'éléments fins à réaction pouzzolanique dont les particules ont des dimensions comprises entre 0,1 µm et 1 µm, et d'un agent fluidifiant, ce composite comportant un renfort constitué de fibres métalliques noyées dans la matrice cimentaire.

Par matrice cimentaire, on désigne la composition cimentaire durcie hors fibres métalliques.

L'addition de fibres métalliques dans des matrices cimentaires permet d'améliorer la ductilité des bétons. Cette technique a été développée depuis plusieurs années. On peut citer entre autres :
- les bétons commercialisés sous le nom de CRC (Compact Reinforced Composites) qui contiennent entre 5 et 10% en volume de fibres métalliques, ayant une longueur de 6 mm et un diamètre égal à 0,15 mm ;
- les bétons commercialisés sous le nom de BPR (Beton de Poudres réactives) ou RPC (Reactive Powder Concrete) qui contiennent au maximum 2,5 % en volume de fibres métalliques ayant une longueur de 13 mm et un diamètre de 0,16 mm ; et
- les bétons appelés CCM (Composites Cimentaires Multiéchelles) et développés par la demanderesse, qui comportent des mélanges de fibres métalliques courtes et longues ; les fibres métalliques courtes ont une longueur de 5 mm et un diamètre de 0,25 mm, les fibres métalliques longues ont une longueur de 25 mm et un diamètre de 0,3 mm ; le pourcentage de fibres incorporées dans la matrice est de 5 % en volume de fibres courtes et de 2 % en volume de fibres longues, soit un total de 7 % en volume de fibres.

Le choix d'un pourcentage élevé de fibres (entre 5 et 10 %) dans les CRC ne peut conduire qu'à un accroissement des caractéristiques mécaniques en traction du matériau en ce qui concerne la résistance et la ductilité, mais ne peut intervenir de manière significative sur la capacité portante et la ductilité d'une structure à l'exception des éléments très minces de la structure. En conséquence, pour les éléments structurels plus épais, de type poutre ou dalle, le CRC est utilisé avec un très fort pourcentage d'armatures classiques de béton armé. En effet, le pourcentage élevé de fibres courtes augmente plus la résistance en traction du matériau que sa ductilité. Aussi, est-il nécessaire, pour construire une structure ductile avec ce type de béton, d'utiliser un pourcentage élevé d'armatures. Mais on fragilise une structure quand on dépasse un seuil en pourcentage d'armatures, d'une part parce que l'on crée alors des concentrations de contrainte très importantes à la surface des structures, induisant ainsi de nombreuses fissures, et d'autre part, parce qu'il existe un effet de groupe négatif entre les armatures qui fonctionnent individuellement beaucoup moins bien. Il se produit une fissuration importante autour des armatures. Les fibres courtes vont à la fois permettre la maîtrise des fissures de surface et des fissures autour des armatures. L'association de deux renforts, armature et fibres courtes, à deux échelles différentes est donc excellente. Mais le CRC présente malgré tout quelques inconvénients. Il s'agit notamment d'une solution technique très sérieuse, à la fois en coût matière, et en coût de maind'oeuvre.

Les fibres métalliques utilisées dans les BPR sont deux fois plus longues que celles utilisées dans les CRC, alors que le diamètre est le même. Ce choix conduit à utiliser des fibres ayant une grande surface spécifique et a deux conséquences :
la première conséquence est que, pour une même maniabilité du matériau avant la prise, on ne peut guère introduire que 2,5 % de fibres en volume dans les BPR, alors que pour les CRC, on introduit entre 5 et 10 % en volume de fibres courtes. Ce pourcentage de fibres relativement faible conduit à deux aspects négatifs du comportement mécanique des BPR. Tout d'abord, les fibres n'améliorent pas la résistance en traction uniaxiale de la matrice qui atteint environ 8 MPa. Ensuite dans une matrice aussi fragile, le pourcentage de fibres n'étant pas suffisamment élevé, on observe une dispersion très importante relative au comportement post-fissuration du matériau.

Ceci montre qu'en introduisant qu'une seule dimension de fibres métalliques dans une matrice ultrarésistante, on ne peut intervenir efficacement aux deux échelles, celle du matériau et celle de la structure.

La deuxième conséquence est que l'adhérence entre la fibre et la matrice est bien meilleure dans le cas des BPR que des CRC, bien que les matrices des BPR et des CRC soient similaires. Les fibres peuvent alors agir sur les fissures les plus ouvertes et on aboutit à un meilleur comportement de la structure en termes de capacité portante et de ductilité. Avec les BPR, on peut utiliser des taux d'armatures classiques inférieurs à ceux utilisés avec les CRC, pour aboutir à des structures ductiles.

Dans les CCM les fibres sont constituées d'un mélange de fibres courtes et de fibres plus longues, ce qui permet d'intervenir à la fois à l'échelle du matériau, grâce à l'augmentation de la résistance en traction, et à l'échelle de structure au niveau de la capacité portante et de la ductilité. Ce faisant, on parvient sans problème, c'est-à-dire avec une bonne maniabilité, à introduire un pourcentage total de fibres élevé qui peut atteindre plus de 7 % en volume. Le comportement en traction uniaxiale est alors à écrouissage positif et peut atteindre sans problème 15 MPa. De plus amples informations sur le comportement des CCM sont données dans "Bulletin des Laboratoires des Ponts et Chaussées - 204 - Juillet-Août 1998 - REF. 4025 - PP. 87-95".

FR-A-2 771 406 concerne un béton comportant une matière cimentaire aussi compacte que celle du BPR et incluant des microfibres de wollastonite et des fibres métalliques ayant de préférence une longueur de 13 mm et un diamètre de 0,16 mm. Ces fibres en acier tréfilé et cylindriques présentent donc une grande surface spécifique.

Cette caractéristique géométrique des fibres métalliques a une double conséquence :
- ces fibres ont une très grande adhérence à la matrice, ce qui leur permet d'agir efficacement sur des fissures ayant des ouvertures allant de la dizaine de micron à la centaine de micron. Elles apportent beaucoup de ductilité au composite cimentaire après fissuration de la matrice qui, sans fibres, serait très fragile.
- Elles induisent des frottements très importants entre elles et la matrice à l'état frais, ce qui conduit à des difficultés de mise en oeuvre du composite cimentaire quand le pourcentage volumique dépasse une limite que l'on peut fixer à 3 %.

Les fibres de wollastonite sont des fibres naturelles de type aciculaire qui ont une longueur de 300 µm et un diamètre moyen de 20 µm, ou des fibres issues d'un broyage dont la longueur moyenne est de 8 µm. Le pourcentage volumique de fibres naturelles introduites dans la matrice peut atteindre 35 %.

Les caractéristiques géométriques ainsi que le pourcentage volumique de fibres naturelles introduites dans la matrice, selon l'enseignement de FR-A-2 771 406, ont une conséquence mécanique évidente. En effet, ces fibres agissent de manière très efficace sur les nombreuses microfissures de la pâte de ciment, c'est-à-dire sur les fissures ayant des ouvertures inférieures au micron. Cette action conduit à une augmentation d'environ 25 % de la résistance en traction de la matrice.

Malgré cette intervention du renfort à deux échelles dans le processus de fissuration de la matrice, la résistance en traction du béton selon FR-A-2 771 406 reste modeste et ne dépasse pas 15 MPa. Ceci est la conséquence d'un choix non optimisé des dimensions des fibres introduites dans la matrice, ceci au regard du processus de fissuration en traction de celle-ci.

En effet, le processus de fissuration se décompose schématiquement en trois étapes :

Au cours de l'étape 1, un très grand nombre de microfissures apparaissent de manière aléatoire dans tout le volume de matériau soumis à une contrainte de traction ; ces microfissures ont des ouvertures qui n'excèdent pas le micron.

Au cours de l'étape 2 du processus de fissuration, certaines microfissures créées lors de l'étape 1 se propagent alors que les autres se referment ; ces nouvelles fissures atteignent des ouvertures qui n'excèdent pas 10 µm.

Parmi les fissures qui se sont propagées lors de l'étape 2, quelques-unes poursuivent leur propagation au cours de l'étape 3 pour former des macrofissures qui ont des ouvertures supérieures à 10 µm qui se propagent de manière instable pour conduire à la rupture du béton. Il s'agit alors de fissures dites "structurelles" dont l'ouverture au moment de la rupture dépend des dimensions du volume du béton soumis à la traction et qui peut donc atteindre plusieurs millimètres.

Lorsque les fibres introduites dans la matrice cimentaire agissent efficacement vis-à-vis des fissures créées au cours de l'étape 2 de fissuration, le composite a un comportement écrouissant positif en traction uniaxiale, c'est-à-dire que les fibres sont capables de reprendre une contrainte de traction, après fissuration de la matrice, supérieure à celle qui a provoqué la fissuration de la matrice.

Dans le cas du béton selon FR-A-2 771 406, les renforts choisis ne peuvent intervenir efficacement que lors des phases 1 et 3 du processus de fissuration en traction de la matrice. Les fibres naturelles interviennent principalement et efficacement lors de l'étape 1, et les fibres métalliques lors de l'étape 3. Or, vis-à-vis de la résistance en traction, c'est surtout au cours de l'étape 2 que les renforts doivent intervenir efficacement. En effet, c'est lors de cette étape 2 que les fissures susceptibles de se propager de manière instable sont créées.

Cette action de couture des fissures créées lors de l'étape 2 du processus de fissuration aurait pu être accomplie efficacement par les fibres métalliques si elles avaient été en plus grand nombre au regard du nombre de fissures créées.

Or, le choix d'une fibre qui a un petit diamètre pour agir sur les fissures nombreuses apparaissant au cours de l'étape 2, et une longueur suffisante pour agir sur les macrofissures produites au cours de l'étape 3, conduit à ne pouvoir introduire qu'un volume restreint dans la matrice, du fait de leur surface spécifique importante, d'où l'efficacité insuffisante vis-à-vis des fissures générées au cours de l'étape 2.

Le but de l'invention est de proposer un composite cimentaire fibré, tel que mentionné en introduction, qui ait une résistance en traction uniaxiale nettement améliorée.

Le but est atteint selon l'invention par le fait que le renfort est constitué d'au moins trois types de fibres :
a) des fibres longues en acier tréfilé ayant une résistance de rupture en traction supérieure à 1 500 MPa, une longueur comprise entre 15 et 25 mm et un diamètre compris entre 0,25 et 0,30 mm, dans un pourcentage volumique compris entre 0,5 et 3 % ;
b) des fibres moyennes en acier tréfilé ayant une résistance de rupture en traction supérieure à 1 500 MPa, une longueur comprise entre 5 et 10 mm et un diamètre compris entre 0,15 et 0,2 mm, dans un pourcentage volumique compris entre 4 et 7 % ;
c) des fibres métalliques courtes et fines ayant une longueur inférieure à 3 mm, dans un pourcentage volumique compris entre 1,5 % et 5 %.

Selon une première variante de réalisation, les fibres courtes se présentent sous la forme de laine d'acier doux provenant du rabotage, en continu, d'un fil et du passage dans un broyeur pour obtenir une poudre composée de fins copeaux, dont la résistance de rupture en traction est supérieure à 800 MPa.

Selon une deuxième variante de réalisation, les fibres courtes sont des fibres cylindriques en acier de résistance supérieure à 2 500 MPa, ces fibres ayant une longueur sensiblement égale à 2 mm et un diamètre sensiblement égal à 0,1 mm.

Ainsi dans le composite proposé, chaque type de fibres correspond à une étape du processus de fissuration.

Les fibres courtes agissent sur les fissures relatives à l'étape 1 de fissuration. Le nombre de fissures créées au cours de l'étape 1 étant très grand, le nombre de fibres courtes doit être grand. L'action de ces fibres métalliques courtes a deux conséquences :
- elles retardent la propagation des fissures de l'étape 1 et donc la création de fissures de l'étape 2 dont la propagation gouverne la résistance en traction de la matrice. Ce faisant, elles permettent d'augmenter la résistance en traction du composite cimentaire, mais de façon moins importante que l'amélioration obtenue par les fibres moyennes;
- elles accroissent l'homogénéité mécanique du composite cimentaire, par diminution de la dispersion relative à la résistance en traction.

Les fibres moyennes, qui ont une longueur comprise entre 5 et 10 mm et un diamètre compris entre 0,15 et 0,2 mm, se trouvent en très grand nombre dans le composite cimentaire proposé du fait du pourcentage en volume compris entre 4 et 7 %.

Ces fibres agissent efficacement sur les fissures générées lors de la phase 2 de fissuration.

Les fibres longues et de diamètre plus important sont destinées à agir sur les fissures créées au cours de l'étape 3 de fissuration.

Le composite fibré proposé a une résistance en traction supérieure ou égale à 30 MPa et il confère un comportement ductile aux structures dans lesquelles il est utilisé.

Il est préférentiellement autoplaçant, c'est-à-dire qu'il peut être mis en place sans aucune vibration.

L'introduction dans la matrice, de trois dimensions différentes de fibres métalliques, constitue une approche optimisée au regard des trois étapes de fissuration en traction du composite. Il est toutefois possible d'introduire une quatrième et même une cinquième dimension de fibres, dont les dimensions en termes de rapport longueur/diamètre ne sont pas optimales vis-à-vis des fissures correspondant aux étapes 2 et 3 de fissuration. Par contre, on peut introduire ces fibres, qui sont individuellement moins efficaces pour agir sur deux échelles de fissures, à un dosage volumique total supérieur à celui qui est possible quand on utilise les trois dimensions de fibres.

Ce choix a une double conséquence :
- la moindre efficacité mécanique individuellement des fibres peut être compensée, vis-à-vis du comportement en traction, par leur nombre plus important ;
- le nombre plus important de fibres conduit généralement à une meilleure homogénéité mécanique en traction, du fait de la moindre dispersion, tant que la matrice n'est pas saturée en fibres. Ce dernier aspect peut être très important, car on prend en compte, dans le dimensionnement des structures en béton fibré ultraperformant, une valeur caractéristique de la traction dudit béton, et non pas une valeur moyenne.

Pour simplifier ce qui a été dit précédemment, on peut avancer que, pour aboutir à un composite cimentaire très résistant et conduisant à un comportement ductile des structures ou éléments structuraux dans lequel il est utilisé, il est indispensable, d'une part, qu'un grand nombre de fibres agissent efficacement sur les fissures créées lors de l'étape 2 du processus de fissuration et que, d'autre part, des fibres agissent efficacement sur les fissures créées lors de l'étape 3.

Dans le cas où il s'agit d'une structure mince en composite cimentaire fibré ayant la même matrice cimentaire que celle décrite en introduction, on peut choisir une fibre ayant des dimensions adaptées aux deux étapes 2 et 3 de fissuration, à condition que, au moment de la rupture du béton, l'ouverture de la fissure structurelle relative à l'étape 3 de fissuration ne soit pas de plusieurs ordres de grandeur supérieure à celle relative à l'étape 2 de fissuration.

D'autre part dans le cas d'une structure mince qui se rompt en flexion, l'ouverture de la fissure correspondant à l'étape 3 de la fissuration dépend directement de l'épaisseur de cette structure.

L'invention se rapporte également à une structure mince en composite cimentaire fibré dont la matrice cimentaire a une résistance en compression supérieure à 150 MPa et une résistance en traction uniaxiale supérieure ou égale à 6 MPa, cette matrice ayant un rapport eau/liant inférieur ou égal à 0,25 et étant constituée d'un mélange de ciment, d'éléments granulaires, d'éléments fins à réaction pouzzolanique dont les particules ont des dimensions comprises entre 0,1 µm et 1 µm, et d'un agent fluidifiant, ce composite comportant un renfort constitué de fibres métalliques noyées dans la matrice cimentaire.

Cette structure mince est caractérisée par le fait que le renfort est constitué d'un seul type de fibres métalliques ayant une longueur comprise entre 5 et 10 mm et un diamètre compris entre 0,15 et 0,2 mm et

par le fait que l'épaisseur de ladite structure est inférieure à deux fois la longueur de la fibre dans un pourcentage volumique compris entre 6 et 15 %.

Le fait de limiter l'utilisation de composites cimentaires monofibrés aux structures minces dans lesquelles la dimension la plus petite n'excède pas deux fois la longueur de la fibre a de plus une conséquence importante au regard de l'efficacité mécanique du renfort fibré. En effet, les fibres sont alors préférentiellement orientées perpendiculairement à la plus petite dimension de la structure, et ont donc une action mécanique optimisée vis-à-vis des fissures qui, elles, se propagent, de par le fonctionnement de ces structures, préférentiellement perpendiculairement à cette petite dimension.

Le ciment utilisé est avantageusement un ciment Portland tels que les ciments Portland CPA PMES, HP, HPR, CEM 1 PMES, 52,5 ou 52,5R ou HTS (Haute teneur en silice).

Les éléments granulaires présents dans la matrice cimentaire sont des grains dont la grosseur maximale est préférentiellement inférieure à 0,4 fois la longueur de la plus petite fibre constituant le renfort.

Les éléments fins à réaction pouzzolanique sont choisis parmi les composés de silice, notamment les fumées de silice, les cendres volantes, les laitiers de hauts-fourneaux, les dérivés d'argile tels que le kaolin. La silice peut être une fumée de silice provenant de l'industrie du zirconium préférentiellement à une fumée de silice provenant de l'industrie du silicium.

L'agent fluidifiant peut être choisi parmi :
les lignosulfonates, la caséine, les polynaphtalènes, en particulier les polynaphtalènesulfonates de métaux alcalins, les dérivés du formaldéhyde, les polyacrylates de métaux alcalins, les polycarboxylates de métaux alcalins et les polyoxydes d'éthylène greffés.

D'autres additifs peuvent être ajoutés dans la composition de la matrice.

Dans ce qui suit, sont présentés 3 exemples de béton fibré ultraperformant (BFUP) dont la conception repose sur ce qui est dit précédemment.

La composition respective de ces 3 BFUP est donnée ci-après.

| Compositions en kg/m³ | | | |
|---|---|---|---|
| Constituants | BFUP 1 | BFUP 2 | BFUP 3 |
| Ciment CPA-CEM 1 52,5 HTS | 1013 | 1013 | 1013 |
| Fumée de silice d'Anglefort | 313 | 313 | 313 |
| Sable de Fontainebleau | 493 | 601 | 466 |
| Eau | 207 | 207 | 207 |
| Superplastifiant Chryso Superplast THP (extrait sec) | 19,5 | 19,5 | 19,5 |
| Fibre 1 | 780 | | 468 |
| Fibre 2 | | 468 | |
| Fibre 3 | | | 156 |
| Fibre 4 | | | 234 |

Les fibres 1, 2 et 3 sont des fibres tréfilées en acier ayant une résistance en traction supérieure à 1 500 MPa. Les dimensions respectives de chaque fibre sont les suivantes :
- **Fibre 1** : longueur: 5 mm ; diamètre : 0,15 mm
- **Fibre 2** : longueur : 10 mm ; diamètre : 0,2 mm
- **Fibre 3** : longueur : 25 mm ; diamètre : 0,3 mm, munie de crochets à ces extrémités.

La fibre 4 est de la laine d'acier doux ayant une résistance en traction supérieure à 800 MPa. Elle est obtenue par rabotage, en continu, d'un fil. Elle est ensuite passée dans des broyeurs pour obtenir une poudre composée de fins copeaux dont la longueur maximale ne dépasse pas 2 à 3 mm.

Remarque : Dans le BFUP 3, la fibre 4 est choisie pour agir sur l'étape 1 de fissuration, la fibre 1 sur l'étape 2 de fissuration, et la fibre 3 sur l'étape 3 de fissuration.

Les 3 BFUP présentés ci-dessus sont traités thermiquement : 72 h après leur fabrication, ils sont étuvés à 90°C à la pression atmosphérique pendant 48 h.

Les 3 BFUP ont un module d'Young supérieur à 45 GPa, et une résistance en compression supérieure à 150 MPa.

Leurs résistances en traction par flexion, indiquées ci-dessous, ont été obtenues à partir d'essais de flexion 3 points sur des éprouvettes prismatiques 4 x 4 x 16 cm.

La valeur moyenne de traction par flexion respective des 3 BFUP sont les suivantes :
BFUP 1 : > **40 MPa**
BFUP 2 : > **45 MPa**
BFUP 3 : > **70 MPa**

Pour le BFUP 2, des essais de flexion 4 points sur des plaques faisant 40 cm de long, 10 cm de large et 2 cm d'épaisseur (soit 2 fois la longueur de la fibre du BFUP 2) ont été également réalisés.

La valeur moyenne de traction par flexion obtenue lors de ces essais est supérieure à **75 MPa** (au lieu de 45 MPa pour. une éprouvette qui fait 4 cm d'épaisseur, donc 4 fois la longueur de la fibre).

On constate donc que ces résultats confirment le fait que, dans le cas d'un BFUP monofibré, il est indispensable de l'utiliser dans des structures minces dont l'épaisseur n'excède pas 2 fois la longueur de la fibre.

## Revendications

1. Composite cimentaire fibré dont la matrice cimentaire a une résistance en compression supérieure à 150 MPa et une résistance en traction uniaxiale supérieure ou égale à 6 MPa ; cette matrice ayant un rapport eau/liant inférieur ou égal à 0,25 et étant constituée d'un mélange de ciment, d'éléments granulaires, d'éléments fins à réaction pouzzolanique dont les particules ont des dimensions comprises entre 0,1 µm et 1 µm, et d'un agent fluidifiant, ce composite comportant un renfort constitué de fibres métalliques noyées dans la matrice cimentaire, **caractérisé par le fait que** le renfort est constitué d'au moins trois types de fibres :
a) des fibres longues en acier tréfilé ayant une résistance de rupture en traction supérieure à 1 500 MPa, une longueur comprise entre 15 et 25 mm et un diamètre compris entre 0,25 et 0,30 mm, dans un pourcentage volumique compris entre 0,5 et 3 % ;
b) des fibres moyennes en acier tréfilé ayant une résistance de rupture en traction supérieure à 1 500 MPa, une longueur comprise entre 5 et 10 mm et un diamètre compris entre 0,15 et 0,2 mm, dans un pourcentage volumique compris entre 4 et 7 % ;
c) des fibres métalliques courtes et fines ayant une longueur inférieure à 3 mm, dans un pourcentage volumique compris entre 1,5 % et 5%.

2. Composite selon la revendication 1, **caractérisé par le fait que** les fibres courtes se présentent sous la forme de laine d'acier doux provenant du rabotage, en continu, d'un fil et du passage dans un broyeur pour obtenir une poudre composée de fins copeaux, dont la résistance de rupture en traction est supérieure à 800 MPa.

3. Composite selon la revendication 1, **caractérisé par le fait que** les fibres courtes sont des fibres cylindriques en acier de résistance de rupture en fraction supérieure à 2 500 MPa, les fibres ayant une longueur sensiblement égale à 2 mm et un diamètre sensiblement égal à 0,1 mm.

4. Composite selon l'une quelconque des revendications 1 à 3,
**caractérisé par le fait qu'**il a une résistance de rupture en traction uniaxiale supérieure ou égale à 30 MPa.

5. Composite selon l'une quelconque des revendications 1 à 4, **caractérisé par le fait qu'**il est autoplaçant.

6. Composite selon l'une quelconque des revendications 1 à 5, **caractérisé par le fait qu'**il a subi un traitement thermique à une température sensiblement égale à 90°C.

7. Structure mince en composite cimentaire fibré dont la matrice cimentaire a une résistance en compression supérieure à 150 MPa et une résistance en traction uniaxiale supérieure ou égale à 6 MPa, cette matrice ayant un rapport eau/liant inférieur ou égal à 0,25 et étant constituée d'un mélange de ciment, d'éléments granulaires, d'éléments fins à réaction pouzzolanique dont les particules ont des dimensions comprises entre 0,1 µm et 1 µm, et d'un agent fluidifiant, ce composite comportant un renfort constitué de fibres métalliques noyées dans la matrice cimentaire, **caractérisée par le fait que**
le renfort est constitué d'un seul type de fibres métalliques ayant une longueur comprise entre 5 et 10 mm et un diamètre compris entre 0,15 et 0,2 mm et
l'épaisseur de ladite structure est inférieure à deux fois la longueur de la fibre dans un pourcentage volumique compris entre 6 et 15 %.

## Patentansprüche

1. Zement-Faser-Verbundstoff, dessen Zementmatrix eine Druckfestigkeit aufweist, die größer als 150 MPa ist, und eine einachsige Zugfestigkeit, die größer oder gleich 6 MPa ist; wobei diese Matrix ein Verhältnis Wasser/Binder aufweist, das kleiner oder gleich 0,25 ist, und aus einer Mischung von Zement, körnchenförmigen Elementen, feinen Elementen mit Puzzolanreaktion, deren Teilchen Abmessungen zwischen 0,1 µm und 1 µm, beide Werte eingeschlossen, aufweisen, und einem Verflüssigungsmittel gebildet ist, wobei dieser Verbundstoff eine Verstärkung aufweist, die aus metallischen Fasern gebildet ist, die in die Zementmatrix eingelagert sind, **gekennzeichnet durch** die Tatsache, dass die Verstärkung aus wenigstens drei Arten von Fasern gebildet ist:
a) langen Fasern aus gezogenem Stahl mit einer Zug-Bruchfestigkeit größer als 1500 MPa, einer Länge zwischen 15 und 25 mm, beide Werte eingeschlossen, und einem Durchmesser zwischen 0,25 und 0,30 mm, beide Werte eingeschlossen, in einem Volumenanteil zwischen 0,5 und 3 %, beide Werte eingeschlossen;
b) mittleren Fasern aus gezogenem Stahl mit einer Zug-Bruchfestigkeit größer als 1500 MPa, einer Länge zwischen 5 und 10 mm, beide Werte eingeschlossen, und einem Durchmesser zwischen 0,15 und 0,2 mm, beide Werte eingeschlossen, in einem Volumenanteil zwischen 4 und 7 %, beide Werte eingeschlossen;
c) feinen und kurzen metallischen Fasern mit einer Länge kleiner als 3 mm, in einem Volumenanteil zwischen 1,5 % und 5 %, beide Werte eingeschlossen.

2. Verbundstoff nach Anspruch 1, **gekennzeichnet durch** die Tatsache, dass die kurzen Fasern in Form feiner Stahlwolle auftreten, die aus dem fortgesetzten Hobeln eines Drahts und dem Passieren eines Mahlwerks hervorgeht, um ein aus feinen Spänen bestehendes Pulver zu erhalten, und deren Zug-Bruchfestigkeit größer als 800 MPa ist.

3. Verbundstoff nach Anspruch 1, **gekennzeichnet durch** die Tatsache, dass die kurzen Fasern zylindrische Fasern aus Stahl mit einer Zug-Bruchfestigkeit größer als 2500 MPa sind, wobei die Fasern eine Länge von im Wesentlichen gleich 2 mm und einen Durchmesser von im Wesentlichen gleich 0,1 mm aufweisen.

4. Verbundstoff nach einem der Ansprüche 1 bis 3, **gekennzeichnet durch** die Tatsache, dass er eine einachsige Zug-Bruchfestigkeit von größer oder gleich 30 MPa aufweist.

5. Verbundstoff nach einem der Ansprüche 1 bis 4, **gekennzeichnet durch** die Tatsache, dass er selbstplatzierend ist.

6. Verbundstoff nach einem der Ansprüche 1 bis 5, **gekennzeichnet durch** die Tatsache, dass er einer thermischen Behandlung bei einer Temperatur von im Wesentlichen gleich 90°C unterzogen wurde.

7. Dünne Struktur aus Zement-Faser-Verbundstoff, dessen Zementmatrix eine Druckfestigkeit aufweist, die größer als 150 MPa ist, und eine einachsige Zugfestigkeit, die größer oder gleich 6 MPa ist; wobei diese Matrix ein Verhältnis Wasser/Binder aufweist, das kleiner oder gleich 0,25 ist, und aus einer Mischung von Zement, körnchenförmigen Elementen, feinen Elementen mit Puzzolanreaktion, deren Teilchen Abmessungen zwischen 0,1 µm und 1 µm, beide Werte eingeschlossen, aufweisen, und einem Verflüssigungmittel gebildet ist, wobei dieser Verbundstoff eine Verstärkung aufweist, die aus metallischen Fasern gebildet ist, die in die Zementmatrix eingelagert sind, **gekennzeichnet durch** die Tatsache, dass
die Verstärkung aus einer einzigen Art von metallischen Fasern gebildet ist, die eine Länge zwischen 5 und 10 mm, beide Werte eingeschlossen, und einen Durchmesser zwischen 0,15 und 0,2 mm, beide Werte eingeschlossen, aufweisen, und
die Dicke dieser Struktur geringer ist als die doppelte Länge der Faser in einem Volumenanteil zwischen 6 und 15 %, beide Werte eingeschlossen.

## Claims

1. A fiber/cement composite, the cementitious matrix of which has a compressive strength of greater than 150 MPa and a uniaxial tensile strength of greater than or equal to 6 MPa, this matrix having a water/binder ratio of less than or equal to 0.25 and consisting of a mix of cement, aggregate elements, fine pozzolanic elements, the particles of which have sizes of between 0.1 µm and 1 µm, and a plasticizer, this composite including a reinforcement consisting of metal fibers embedded in the cementitious matrix, **characterized in that** the reinforcement consists of at least three types of fiber:
a) long fibers made of wire-drawn steel, having a tensile strength of greater than 1500 MPa, a length of between 15 and 25 mm and a diameter of between 0.25 and 0.30 mm, in a percentage by volume of between 0.5 and 3%;
b) medium fibers made of wire-drawn steel, having a tensile strength of greater than 1500 MPa, a length of between 5 and 10 mm and a diameter of between 0.15 and 0.2 mm, in a percentage by volume of between 4 and 7%; and
c) short fine metal fibers having a length of less than 3 mm, in a percentage by volume of between 1.5% and 5%.

2. The composite as claimed in claim 1, **characterized in that** the short fibers are in the form of a mild steel wool obtained, by continuous planing of a wire and passage through a mill in order to obtain a powder composed of fine chips, the tensile strength of which is greater than 800 MPa.

3. The composite as claimed in claim 1, **characterized in that** the short fibers are cylindrical steel fibers having a tensile strength of greater than 2500 MPa, the fibers having a length substantially equal to 2 mm and a diameter substantially equal to 0.1 mm.

4. The composite as claimed in any one of claims 1 to 3, **characterized in that** it has a uniaxial tensile strength of greater than or equal to 30 MPa.

5. The composite as claimed in any one of claims 1 to 4, **characterized in that** it is self-placing.

6. The composite as claimed in any one of claims 1 to 5, **characterized in that** it has undergone a heat treatment at a temperature of approximately 90°C.

7. A thin structure made of fiber/cement composite, the cementitious matrix of which has a compressive strength of greater than 150 MPa and a uniaxial tensile strength of greater than or equal to 6 MPa, this matrix having a water/binder ratio of less than or equal to 0.25 and consisting of a mix of cement, aggregate elements, fine pozzolanic elements, the particles of which have sizes of between 0.1 µm and 1 µm, and a plasticizer, this composite including a reinforcement consisting of metal fibers embedded in the cementitious matrix, **characterized in that**
the reinforcement consists of metal fibers of a single type, having a length of between 5 and 10 mm and a diameter of between 0.15 and 0.2 mm and
**in that** the thickness of said structure is less than twice the length of the fiber in a percentage by volume of between 6 and 15%.
